# EUROPÄISCHE PATENTSCHRIFT

(11) **EP 4 003 799 B1**
(45) Veröffentlichungstag und Bekanntmachung des Hinweises auf die Patenterteilung: **12.07.2023**
(21) Anmeldenummer: 20736968.7
(22) Anmeldetag: 02.07.2020
(51) Int. Cl.: B60T 13/26, B60T 15/02, B60T 15/04, B60T 15/54, B60T 15/18, B60T 15/36

(54) **RELAISVENTIL FÜR EINE PNEUMATISCHE VENTILEINHEIT**
RELAY VALVE FOR A PNEUMATIC BRAKE UNIT
VALVE-RELAIS POUR UNITÉ DE FREIN PNEUMATIQUE

(30) Priorität: 23.07.2019 DE 102019119808
(43) Veröffentlichungstag der Anmeldung: 01.06.2022
(73) Patentinhaber: ZF CV Systems Europe BV, 1170 Brüssel (BE)
(72) Erfinder: BEIER, Peter, 31515 Wunstorf (DE); SCHAPPLER, Hartmut, 30455 Hannover (DE); OESER, Christian, 30179 Hannover (DE)
(74) Vertreter: Ohlendorf, Henrike
(86) Internationale Anmeldenummer: PCT/EP2020/068639
(87) Internationale Veröffentlichungsnummer: WO 2021/013491

(56) Entgegenhaltungen:
- EP-B1- 2 266 854
- DE-A1-102009 040 759
- DE-A1-102014 010 955
- DE-A1-102016 006 009

## Beschreibung

Die Erfindung betrifft ein Relaisventil für eine pneumatische Ventileinheit, beispielsweise für eine Ventileinheit für ein Bremssystem eines Nutzfahrzeugs, welches ein erstes Zusammenbauteil und ein zweites Zusammenbauteil aufweist, wobei in dem ersten Zusammenbauteil ein hohlzylindrischer Führungsabschnitt eines Kolbens des Relaisventils axial geführt aufgenommen oder aufnehmbar ist, und wobei das zweite Zusammenbauteil weitere Ventilbauteile sowie den Entlüftungsbereich des Relaisventils aufweist.

Aus der EP 2 266 854 B1 ist ein Relaisventil für eine Druckluftbremsanlage eines Nutzfahrzeugs bekannt. Das Relaisventil weist ein Gehäuse, einen in dem Gehäuse lateral verschiebbar angeordneten Relaisventilkolben mit einem Relaisventilkolbenloch, und einen den Relaisventilkolben in dem Gehäuse einschließenden Relaisventildeckel mit einem Relaisventildeckelloch auf. Der Relaisventildeckel weist wenigstens ein Befestigungsmittel zur Befestigung eines Geräuschdämpfers an dem Relaisventildeckel auf, wobei das Relaisventil durch das Relaisventilkolbenloch und durch das Relaisventildeckelloch zu dem Geräuschdämpfer entlüftbar ist, und wobei von dem Relaisventildeckel und dem Relaisventilkolben eine Steuerdruckkammer begrenzt wird. Dieses Relaisventil weist demnach ein mit einem Deckel verschließbares Gehäuse auf, in das alle Bauteile des Relaisventils nacheinander aufwendig eingesetzt und befestigt sind. Außerdem sind an dem Deckel bei allen dort beschriebenen Ausführungsformen Mittel zur axialen Führung des Kolbens des Relaisventils ausgebildet, sodass an sich ein zweiteiliges Gehäuse genutzt wird. Der Deckel wird mit dem Gehäuse mittels Schrauben fest verbunden. Wenngleich sich dieses Konzept eines Relaisventils als an sich brauchbar erwiesen hat, so ist bei dessen Montage ein vergleichsweis hoher Fertigungsaufwand zu verzeichnen.

Der Erfindung lag daher unter anderem die Aufgabe zugrunde, ein Relaisventil für eine pneumatische Ventileinheit beispielswiese eines Fahrzeugs vorzustellen, welches sich besonders einfach und kostengünstig herstellen sowie montieren lässt.

Die Lösung dieser Aufgabe wird mit einem Relaisventil erreicht, welches die Merkmale des Anspruchs 1 aufweist. Vorteilhafte Weiterbildungen sind in den abhängigen Ansprüchen definiert.

Demnach betrifft die Erfindung ein Relaisventil für eine pneumatische Ventileinheit, beispielsweise für eine Ventileinheit für ein Bremssystem eines Nutzfahrzeugs, welches ein erstes Zusammenbauteil und ein zweites Zusammenbauteil aufweist, wobei in dem ersten Zusammenbauteil ein hohlzylindrischer Führungsabschnitt eines Kolbens des Relaisventils axial geführt aufgenommen oder aufnehmbar ist, und wobei das zweite Zusammenbauteil weitere Ventilbauteile sowie den Entlüftungsbereich des Relaisventils aufweist.

Zur Lösung der gestellten Aufgabe ist vorgesehen, dass zumindest das erste Zusammenbauteil sowie das zweite Zusammenbauteil zusammengebaut eine Vormontageeinheit bilden, dass das erste Zusammenbauteil und das zweite Zusammenbauteil zur Erzeugung der Vormontageeinheit mittels einer Bajonettverbindung zusammengefügt sind, und dass die Vormontageeinheit in einen durch eine topfförmige Innenwand begrenzten Innenraum eines Gehäuses der Ventileinheit eingesetzt sowie darin befestigt ist.

Hierdurch ergibt sich eine beträchtliche Vereinfachung des Montageprozesses des Relaisventils, die mit einer Senkung der Herstellungskosten einhergeht. Eine solche, wie geschildert aufgebaute Vormontageeinheit, welche alle gehäuseinternen Bauteile des Relaisventils umfasst, lässt sich anderweitig vormontieren und einfach in das Gehäuse des Relaisventils beziehungsweise der Ventileinheit einsetzen sowie dort mittels eines Sicherungsrings etc. darin festlegen. Alternativ dazu kann auch zunächst der Kolben des Relaisventils in den Innenraum des Gehäuses des Relaisventils eingesetzt werden. Anschließend können dann die beiden mittels der Bajonettverbindung verbundenen Zusammenbauteile als quasi einstückige Vormontageeinheit in das Gehäuse eingesetzt und dort befestigt werden. Die erfindungsgemäße Ventileinheit kann, gegebenenfalls zusammen mit weiteren Komponenten, ein Bestandteil eines elektronischen Bremssystems einer Feststellbremse und/oder eines Achsmodulators zur Regelung solcher Bremssysteme eines Nutzfahrzeugs sein.

Gemäß einer technisch vorteilhaften Ausgestaltung des die Merkmale der Erfindung aufweisenden Relaisventils ist vorgesehen, dass der Führungsabschnitt des Kolbens eine diese und einen Kolbenteller des Kolbens durchdringende zentrische Stufenbohrung aufweist, dass am inneren Boden des Gehäuses ein zentrisch zu einer Längsmittelachse des Relaisventils ausgerichteter Führungszapfen ausgebildet ist, und dass der Kolben mit seiner Stufenbohrung auf dem Führungszapfen aufgenommen sowie durch diesen axial verschiebbar geführt ist. Hierdurch ist eine präzise axiale Führung des Kolbens im Gehäuse gewährleistet, wobei mittels des Kolbens ein Einlassventil und ein Auslassventil beziehungsweise deren Funktionen betätigbar sind.

Weiter kann vorgesehen sein, dass das erste Zusammenbauteil eine kegelstumpfförmige Grundgeometrie sowie das zweite Zusammenbauteil eine zylindrische Grundgeometrie mit jeweils einer zentrischen axialen Bohrung aufweisen, dass der ein hohlzylindrischer Führungsabschnitt des Kolbens axial beweglich in der zentrischen Bohrung des ersten Zusammenbauteils aufgenommen ist, dass in der zentrischen Bohrung des zweiten Zusammenbauteils eine hohlzylindrische Ventiltellerführung befestigt ist, an deren axial inneren Ende ein Ventilteller axial beweglich gelagert ist, dass ein radial innen am ersten Zusammenbauteil ausgebildeter wulstartiger, kreisförmiger, axial vorstehender Dichtsitz sowie der mittels einer ersten Druckfeder gegen diesen Dichtsitz mit einer Federkraft beaufschlagter Ventilteller des zweiten Zusammenbauteils ein Einlassventil des Relaisventils bilden, und dass ein ringförmiger Dichtabschnitt am axial freien Ende der Kolbenstange sowie der Ventilteller am zweiten Zusammenbauteil ein Auslassventil bilden. Hierdurch ist eine präzise axiale Führung des Kolbens im Gehäuse gewährleistet. Zudem sind eine Einlassventilfunktion und eine Auslassventilfunktion des Relaisventils geschaffen, welche beide mittels des Kolbens aktiviert oder deaktiviert werden.

Eine andere günstige Ausgestaltung des Relaisventils mit den Merkmalen der Erfindung sieht vor, dass das erste Zusammenbauteil zwei radial gegenüber angeordnete sowie in Bezug zur Längsachse des Relaisventils zueinander beabstandete Gruppen mit jeweils mindestens drei zueinander beabstandeten, radial auswärts gerichteten Rippen zur Luftführung aufweist, dass diese Rippen innerhalb der beiden Gruppen jeweils zueinander fluchtend ausgebildet sind, dass in mindestens einer Gruppe mindestens eine Rippe einen radial auswärts gerichteten Ausrichtvorsprung aufweist, welcher als Montagehilfe zur Gewährleistung einer in Umfangsrichtung ordnungsgemäß ausgerichteten Einbauposition der Vormontageeinheit mit optimaler Luftführung zumindest bereichsweise formschlüssig in eine zugeordnete, geometrisch komplementäre Aussparung in der Innenwand des Gehäuses der Ventileinheit angeordnet ist.

Alternativ dazu kann vorgesehen sein, dass das erste Zusammenbauteil zwei radial gegenüber angeordnete sowie in Bezug zur Längsachse des Relaisventils zueinander beabstandete Gruppen mit jeweils mindestens drei zueinander beabstandeten, radial auswärts gerichteten Rippen zur Luftführung aufweist, dass diese Rippen innerhalb der beiden Gruppen jeweils zueinander fluchtend ausgebildet sind, dass in mindestens einer Gruppe mindestens eine Rippe einen radial auswärts gerichteten Ausrichtvorsprung aufweist, welcher als optische Montagehilfe zur Gewährleistung einer in Umfangsrichtung ordnungsgemäß ausgerichteten Einbauposition der Vormontageeinheit mit optimaler Luftführung dient, ohne dass dieser Ausrichtvorsprung dazu in eine zugeordnete Aussparung in der Innenwand des Gehäuses der Ventileinheit eingreift.

Durch die gruppiert angeordneten parallelen Rippen des ersten Zusammenbauteils ist eine optimale, weitgehend turbulenzarme Luftströmung innerhalb des Relaisventils gewährleistet. Der Ausrichtvorsprung ermöglicht hierbei stets die korrekte umfangsseitige Einbaulage der Vormontageeinheit im Gehäuse des Relaisventils beziehungsweise der der Ventileinheit für eine optimale Luftleitungsfunktion in demselben. Montagefehler sind hierdurch ausgeschlossen. Zugleich erhöhen die Rippen die mechanische Festigkeit des ersten Zusammenbauteils. Der Begriff der "Umfangsposition" der Vormontageeinheit des Relaisventils bezieht sich im Kontext der Beschreibung auf einen bestimmten Drehwinkel der Vormontageeinheit um die Längsmittelachse des Relaisventils beim Einschieben in den Innenraum des Gehäuses zur Schaffung des Relaisventils, bei dem der Ausrichtvorsprung mit der Aussparung in der Innenwand in Eingriff kommt und so die korrekte Einbauposition gewährleistet ist.

In diesem Zusammenhang kann vorgesehen sein, dass am ersten Zusammenbauteil orthogonal zu den Rippen der beiden Gruppen mindestens zwei einander gegenüberliegende Querrippen zueinander fluchtend ausgebildet sind. Hierdurch ist die mechanische Steifigkeit des ersten Zusammenbauteils weiter erhöht.

Hierbei ist vorgesehen, dass die beiden Gruppen mit den jeweils mindestens drei Rippen und die mindestens zwei Querrippen so ausgebildet und angeordnet sind, dass sie einen näherungsweise zylindrischen sowie koaxial zur Längsmittelachse ausgebildeten Innenraum zur axialen Durchführung des Führungsabschnitts des Kolbens freilassen. Hierdurch verbleibt genügend Raum zur axialen Durchführung der den Führungszapfen koaxial umschließenden Kolbenstange durch das erste Zusammenbauteil.

Weiter ist bevorzugt vorgesehen, dass der mindestens eine Ausrichtvorsprung an der mindestens einen Rippe in Umfangsrichtung derart angeordnet ist, dass sich bei in das Gehäuse der Ventileinheit eingesetzter Vormontageeinheit eine optimale Luftführung ergibt. Infolgedessen sind die Rippen der beiden Gruppen stets eindeutig und optimal zur primären Luftströmung innerhalb des Gehäuses der Ventileinheit ausgerichtet und der Montageprozess wird dadurch beträchtlich vereinfacht.

Außerdem kann vorgesehen sein, dass das zweite Zusammenbauteil axial außen einen durchmesserkleineren axialen Fortsatz und einen durchmessergrößeren axialen Fortsatz aufweist, welche koaxial zur Längsmittelachse ausgebildet sind, wobei der durchmesserkleinere Fortsatz im Anschluss an das Auslassventil einen Entlüftungsraum des Relaisventils umgrenzt. Hierdurch ergibt sich ein hoher funktioneller Integrationsgrad des zweiten Zusammenbauteils. Mittels des eine Entlüftung ausbildenden durchmesserkleineren Fortsatzes an dem zweiten Zusammenbauteil ist insbesondere ein verlässlicher pneumatischer Anschluss an ein vorzugsweise akustisches Dämpfungselement gewährleistet.

Weiter ist bevorzugt vorgesehen, dass die am zweiten Zusammenbauteil befestigte Ventiltellerführung eine innere Ringwand und eine zu dieser koaxial angeordnete äußere Ringwand aufweist, wobei zwischen der inneren Ringwand und der äußeren Ringwand ein Ringraum mit einem Boden zur Aufnahme eines axialen Endes der ersten Druckfeder ausgebildet ist. Hierdurch sind eine zuverlässige Führung und Lagesicherung des Ventiltellers sowie der genannten ersten Druckfeder gegeben.

Eine andere Weiterbildung des die Merkmale der Erfindung aufweisenden Relaisventils sieht vor, dass die innere Ringwand der Ventiltellerführung eine Vielzahl von in Umfangsrichtung gleichmäßig zueinander beabstandet angeordnete und parallel zur Längsmittelachse orientierte Längsrippen aufweist. Hierdurch ist ein Schalldämpfungseffekt der über den Entlüftungsraum austretenden Druckluft gegeben.

Bevorzugt weisen freie Enden der durchmesserkleineren und der durchmessergrößeren axialen Fortsätze jeweils eine Schneidkante auf. Hierdurch lassen sich die erwähnten Fortsätze bei der Montage des Relaisventils leichter in ein offenporiges Dämmelement, wie zum Beispiel ein akustisches Dämpfungsvlies oder Dämpfungsgestrick der Entlüftung einpressen.

Vorzugsweise weist der durchmesserkleinere Fortsatz mindestens einen quer zur Längsmittelachse verlaufenden Steg auf. Hierdurch ist die Bauteilsteifigkeit in diesem Abschnitt des Relaisventils vorteilhaft erhöht. Zudem wird durch diesen Steg die Geschwindigkeit von abströmender Luft reduziert und damit zugleich deren Geräuschentwicklung vermindert. Außerdem bewirkt dieser Steg eine zumindest rudimentäre Filterfunktion gegenüber Fremdkörpern. Schließlich kann der Steg gegebenenfalls als ein Angriffspunkt für ein geeignetes Werkzeug bei einer Demontage des Relaisventils dienen.

Gemäß einer anderen günstigen Fortbildung ist zumindest das erste Zusammenbauteil schwingungsdämpfend ausgebildet oder angeordnet. Hierdurch werden Arbeitsgeräusche des Relaisventils beträchtlich abgeschwächt. Die beiden Zusammenbauteile können zu diesem Zweck zum Beispiel aus oder mit einem schwingungsdämpfenden Kunststoff oder dergleichen hergestellt sein.

Außerdem kann vorgesehen sein, dass das erste Zusammenbauteil im Bereich eines kolbentellernahen Deckelabschnitts eine Ringnut aufweist, welche einer führungsabschnittnahen Unterseite des Kolbentellers zugewandt ist, und dass in der Ringnut das eine axiale Ende einer zweiten Druckfeder angeordnet ist, welche sich mit ihrem anderen axialen Ende am Kolbenteller abstützt. Mittels einer solchen Druckfeder kann der Betrag eines zum Betätigen des Kolbens notwendigen Steuerluftdrucks eingestellt sein. Zudem unterstützt die Druckfeder die Rückkehr des Kolbens in dessen unbetätigte Ausgangsposition.

Weiter kann vorgesehen sein, dass in das erste Zusammenbauteil und/oder das zweite Zusammenbauteil des Relaisventils mindestens ein Drucksensor oder ein Temperatursensor integriert ist. Hierdurch sind weitere Funktionen kostengünstig in das Relaisventil integriert. Beispielsweise lässt sich mittels derartiger Sensoren die Gefahr einer Vereisung des Relaisventils unter bestimmten Einsatzbedingungen frühzeitig erkennen.

Schließlich sind an den beiden Zusammenbauteilen alle notwendigen Dichtringe angeordnet, welche in kreisförmige Nuten am ersten Zusammenbauteil und am zweiten Zusammenbauteil eingesetzt sind.

Zum besseren Verständnis der Erfindung ist der Beschreibung eine Zeichnung beigefügt. In der Zeichnung zeigt
Fig. 1 einen Längsschnitt durch ein die Merkmale der Erfindung aufweisendes Relaisventils mit einem topfförmigen Gehäuse und einer darin platzierten, aus zwei Zusammenbauteilen bestehenden Vormontageeinheit,
Fig. 2 eine Seitenansicht der Vormontageeinheit des Relaisventils gemäß Fig. 1 ohne einen Kolben,
Fig. 3 eine um 90° um eine Längsmittelachse in Bezug zur Fig. 2 gedrehten Seitenansicht der Vormontageeinheit ohne den Kolben, und
Fig. 4 eine Draufsicht auf die Vormontageeinheit gemäß den Figuren 1 bis 3 ohne den Kolben.

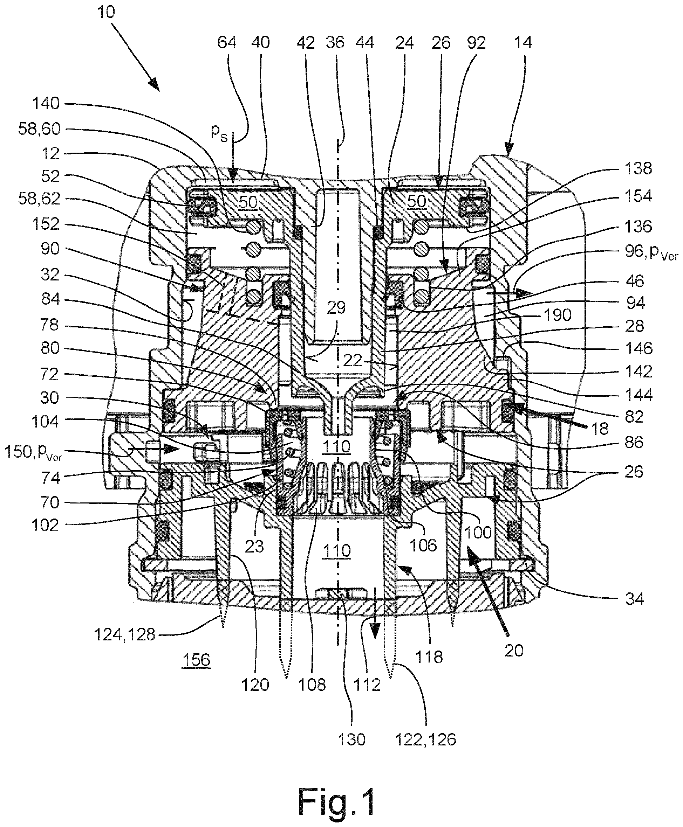

Das in Fig. 1 dargestellte Relaisventil 10 ist in einem Gehäuse 12 einer pneumatischen Ventileinheit 14 eines nicht dargestellten Bremssystems eines gleichfalls nicht gezeichneten Nutzfahrzeugs aufgenommen.

Das Relaisventil 10 weist ein erstes Zusammenbauteil 18 und ein zweites Zusammenbauteil 20 sowie einen Kolben 24 auf, wobei das erste Zusammenbauteil 18 und das zweite Zusammenbauteil 20 sowie vorzugsweise der Kolben 24 im zusammengesetzten Zustand insgesamt eine Vormontageeinheit 26 bilden. Das erste Zusammenbauteil 18 und das zweite Zusammenbauteil 20 sind mittels einer Bajonettverbindung 30 fest miteinander verbunden und ein hohlzylindrischer Führungsabschnitt 28 des Kolbens 24 ist zentrisch innerhalb des ersten Zusammenbauteils 18 axial verschiebbar aufgenommen.

Diese Vormontageeinheit 26 ist in eine einseitig offene, topfartige und gestufte Innenwand 32 des Gehäuses 12 der Ventileinheit 14 eingesetzt und darin lediglich exemplarisch mittels eines Sicherungsrings 34 axial lagegesichert und befestigt. Infolgedessen ergibt sich eine beträchtliche Vereinfachung des Montageprozesses des Relaisventils 10 innerhalb des Gehäuses 12 der Ventileinheit 14, da die Vormontageeinheit 26 als Ganzes in das Gehäuse 12 eingeschoben werden kann. Die Innenwand 32, der Kolben 24 sowie die beiden Zusammenbauteile 18, 20 sind im Wesentlichen rotationssymmetrisch zu einer Längsmittelachse 36 aufgebaut. Die beiden Zusammenbauteile 18, 20 weisen dabei eine weitgehend kegelstumpfförmige beziehungsweise zylindrischen Grundgeometrie mit jeweils einer zentrischen Bohrung 22, 23 auf. Die zentrische Bohrung 22 im ersten Zusammenbauteil 18 bildet einen Innenraum 190 zur Durchführung des Führungsabschnitts 28 des Kolbens 24.

Zumindest das erste Zusammenbauteil 18 ist bevorzugt schwingungsdämpfend ausgebildet, zum Beispiel durch Herstellung desselben aus einem geeigneten schwingungsdämpfenden Kunststoff.

An einem Boden 40 der Innenwand 32 des Gehäuses 12 ist ein zentrisch zur Längsmittelachse 36 angeordneter und hier hohlzylindrischer Führungszapfen 42 vorhanden, auf dem der Kolben 24 axial verschiebbar aufgenommen ist. Hierzu weist der Kolben 24 eine seinen hohlzylindrischen Führungsabschnitt 28 und seinen Kolbenteller 50 durchdringende zentrische Stufenbohrung 29 auf, wobei der Führungszapfen 42 innerhalb der Stufenbohrung 29 des Kolben 24 abschnittweise angeordnet ist. Die Abdichtung zwischen dem Kolben 24 und dem Führungszapfen 42 erfolgt mittels eines in seiner Einbaulage elliptischen Dichtrings 44.

Im weiteren Fortgang der Beschreibung sind die übrigen elliptischen sowie kreuzschraffierten Dichtringe der besseren zeichnerischen Übersicht halber in den Zeichnungsfiguren nicht mit Bezugsziffern versehen. Die Abdichtung und/oder eine unterstützende radiale Führung des Führungsabschnitts 28 des Kolbens 24 innerhalb des ersten Zusammenbauteils 18 erfolgt mittels eines Lippendichtrings 46. Der im Wesentlichen scheibenförmige massive Kolbenteller 50 des Kolbens 24 ist mittels eines Z-förmigen Dichtrings 52 radial außen gegenüber der Innenwand 32 abgedichtet. Die Nutzung des Lippendichtrings 46 ist nicht bei jeder Bauform dieses Relaisventils notwendig. Bei dessen Nutzung ist jedoch für einen Druckausgleich zu sorgen, welches weiter unten erläutert wird.

Zwischen dem ersten Zusammenbauteil 18 und dem Boden 40 ist ein im Wesentlichen zylindrischer Arbeitsraum 58 ausgebildet, der durch den Kolbenteller 50 in eine obere Kammer 60 und eine untere Kammer 62 unterteilt ist. Die obere Kammer 60 ist, wie mit einem Pfeil 64 angedeutet, mit einem Steuerdruck p_{S} zur Ansteuerung des Relaisventils 10 beaufschlagbar. In der unteren Kammer 62 befindet sich Druckluft mit dem ausgesteuerten Versorgungsdruck oder beispielsweise Bremsdruck.

An dem zweiten Zusammenbauteil 20 ist eine Ventiltellerführung 70 zur axialen Führung eines näherungsweise kreisringförmigen Ventiltellers 72 sowie zur Lagesicherung einer ersten Druckfeder 74 befestigt. Der Ventilteller 72 weist bevorzugt eine der besseren zeichnerischen Übersicht halber nicht bezeichnete gummierte Oberseite mit einer näherungsweise kreisringförmigen Geometrie auf, welcher mit einem gleichfalls nicht bezeichneten, innenliegenden und ringförmig umlaufenden Metall- oder Kunststoffprofil mit einer L-förmigen Querschnittsgeometrie mechanisch stabilisiert ist. Mittels der Federkraft einer ersten Druckfeder 74 ist der Ventilteller 72 axial gegen einen wulstartigen, umlaufenden axial vorstehenden Dichtsitz 78 des ersten Zusammenbauteils 18 beaufschlagt und bildet zusammen mit diesem ein Einlassventil 80. Ein ringförmiger Dichtabschnitt 82 an einem axial freien Ende 84 des Führungsabschnitts 28 des Kolbens 24 bildet im Zusammenwirken mit dem Ventilteller 72 ein Auslassventil 86.

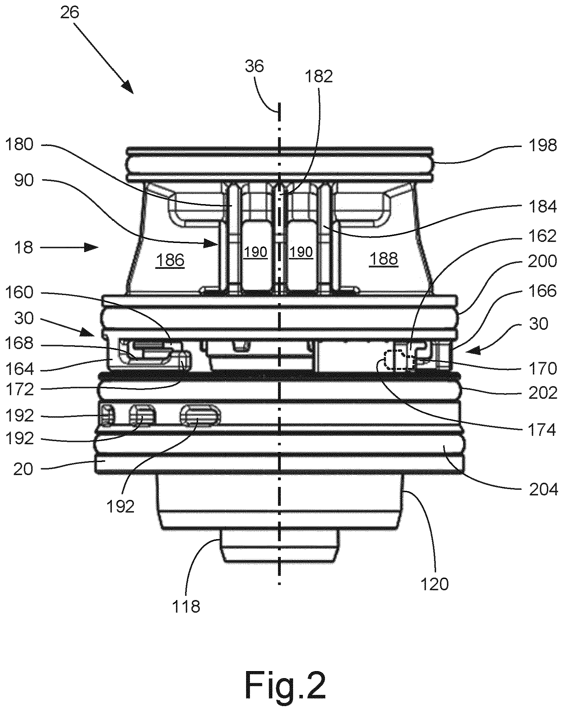

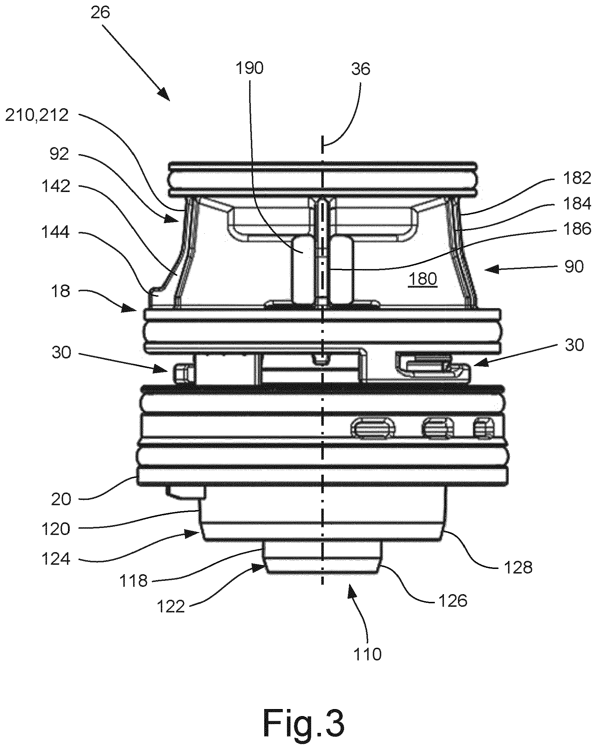

An dem ersten Zusammenbauteil 18 sind ferner eine erste Gruppe 90 und eine zweite Gruppe 92 von Rippen integral ausgebildet, wobei jede Gruppe 90, 92 bevorzugt jeweils drei, parallel beabstandet zur Zeichenebene verlaufende Rippen zur Luftführung aufweist (vergleiche Beschreibung zu Fig. 1 weiter unten sowie zu den Figuren 2 und 3). Die beiden Gruppen 90, 92 mit den Rippen sind hierbei radial gegenüberliegend sowie radial innen zueinander beabstandet angeordnet, um eine koaxiale Durchführung des auf dem Führungszapfen 42 aufgenommenen Führungsabschnitts 28 des Kolbens 24 zu ermöglichen.

Ein näherungsweise ringförmiger Raum 94 zwischen dem ersten Zusammenbauteil 18 und der Innenwand 32 ist mittels eines nicht dargestellten Kanals beispielsweise mit einem gleichfalls nicht eingezeichneten Bremszylinder des Bremssystems verbunden, so dass dieser kontrolliert von dem Relaisventil 10, wie mit einem weiteren Pfeil 96 angedeutet, mit einem Versorgungsdruck p_{Ver} zur Betätigung des Bremszylinders oder eines anderen pneumatischen Verbrauchers beaufschlagbar ist. Dieser Versorgungsdruck p_{Ver} kann auch als der von dem Relaisventil ausgesteuerter Versorgungsdruck p_{Ver} bezeichnet werden.

Die Ventiltellerführung 70 weist eine innere Ringwand 100 und eine diese koaxial umgebende äußere Ringwand 102 auf, wobei radial zwischen der inneren Ringwand 100 und der äußeren Ringwand 102 ein Ringraum 104 mit einem Boden 106 ausgebildet ist. In diesem Ringraum 104 ist die erste Druckfeder 74 angeordnet, welche sich mit deren einen axialen Ende am Boden 106 der Ventiltellerführung 70 und mit ihrem anderen axialen Ende an der Unterseite des Ventiltellers 72 abstützt.

Der Ventilteller 72 ist mittels integral zu seiner Gummierung ausgeführten, nicht bezeichneten Dichtlippen beziehungsweise Dichtkanten sowohl gegenüber der inneren als auch der äußeren Ringwand 100, 102 abgedichtet und/oder axial geführt. Die innere Ringwand 100 der Ventiltellerführung 70 verfügt über eine Vielzahl von umfangsseitig zueinander sowie näherungsweise parallel zur Längsmittelachse 36 verlaufende Längsrippen 108. Infolgedessen ergibt sich ein Schalldämpfungseffekt an der über einen Entlüftungsraum 110 des Relaisventils 10 austretenden Entlüftungsströmung 112. Zudem stellt sich hierdurch eine weitgehend laminare Luftströmung im Bereich des Entlüftungsraums 110 ein.

Das zweite Zusammenbauteil 20 verfügt über einen integral an diesem ausgeformten durchmesserkleineren axialen Fortsatz 118 sowie einen durchmessergrößeren axialen Fortsatz 120, wobei letzterer den durchmesserkleineren Fortsatz 118 koaxial beabstandet umschließt. Die beiden Fortsätze 118, 120 weisen hierbei jeweils eine im Wesentlichen hohlzylindrische Geometrie auf. Die der besseren zeichnerischen Übersicht halber nicht bezeichnete axiale Länge des durchmessergrößeren Fortsatzes 120 ist hierbei kleiner bemessen als die ebenfalls nicht bezeichnete axiale Länge des durchmesserkleineren Fortsatzes 118. Der durchmesserkleinere Fortsatz 118 umgrenzt den Entlüftungsraum 110 des Relaisventils 10.

Das freie Ende 122 des durchmesserkleineren Fortsatzes 118 und ein freies Ende 124 des durchmessergrößeren Fortsatzes 120 sind jeweils als eine Schneidkante 126, 128 mit einem kleinen Krümmungsradius ausgeführt. Durch die Schneidkanten 126, 128 ist ein optimaler pneumatischer Anschluss des Entlüftungsraums 110 des Relaisventils 10 an ein zeichnerisch nicht dargestelltes akustisches Dämpfungselement zur Schallminimierung von Betriebsgeräuschen des Relaisventils 10 gegeben. Das Dämpfungselement weist zu diesem Zweck ein geeignetes Vlies oder Gestrick auf. Darüber hinaus ist innerhalb des durchmesserkleineren Fortsatzes 118 mindestens ein Steg 130 integral ausgeformt, wobei der unter anderem als Siebelement fungierende Steg 130 senkrecht zur Längsmittelachse 36 verläuft. Der Steg 130 dient vorrangig zum Zurückhalten von Fremdkörpern oder dergleichen, er kann aber auch als ein Angriffspunkt für ein Werkzeug zur Demontage der Vormontageeinheit 26 aus dem Gehäuses 12 der Ventileinheit 14 benutzt werden.

Das erste Zusammenbauteil 18 weist an seinem kolbentellernahen Deckelabschnitt 154 ferner eine Ringnut 136 auf, deren Öffnung der Unterseite 138 des Kolbens 24 zugewandt ist und in der fakultativ eine zweite Druckfeder 140 zur Einstellung des Ansprechverhaltens des Kolbens 24 aufgenommen sein kann.

Eine Rippe 142 innerhalb der zweiten Gruppe 92 von Rippen weist einen radial auswärts gerichteten Ausrichtvorsprung 144 auf, der in dem hier dargestellten ordnungsgemäßen Montagezustand der Vormontageeinheit 26 innerhalb der Innenwand 32 des Gehäuses 12 der Ventileinheit 14 zumindest bereichsweise formschlüssig in eine Aussparung 146 des Gehäuses 12 eingreift. Diese Aussparung 146 ist zu diesem Zweck im Wesentlichen geometrisch komplementär zu dem Ausrichtvorsprung 144 an der Rippe 142 ausgebildet. Die Aussparung 146 ist in der Innenwand 32 hierbei umfangsseitig derart positioniert, dass sich bei in das Gehäuse 12 der Ventileinheit 14 eingesetzter Vormontageeinheit 26 eine optimale Luftströmung innerhalb des Relaisventils 10, insbesondere im Bereich der Rippen des ersten Zusammenbauteils 18 zwischen dem Führungsabschnitt 28 des Kolbens 24 und der Innenwand 32, einstellt.

Über einen weiteren Kanal innerhalb des Gehäuses 12 der Ventileinheit 14 wird ein Vorratsdruck p_{Vor}, wie dies mit dem Pfeil 150 lediglich symbolisch angedeutet ist, im Bereich der Bajonettverbindung 30 dem Relaisventil 10 zugeführt. Der Vorratsdruck p_{Vor} wird hierbei von einer Druckluftversorgungseinheit, wie einem Kompressor des Nutzfahrzeugs, bereitgestellt.

In der in Fig. 1 gezeigten Schaltstellung ist der Kolben 24 des Relaisventils 10 unbetätigt, sodass das Einlassventil 80 geschlossen und das Auslassventil 86 offen ist. Etwaiger noch in einem Bremszylinder vorhandener Bremsdruck kann somit entgegen der Orientierung des Pfeils 96 über den erwähnten Raum 94 entlang der Rippen des ersten Zusammenbauteils 18 nach radial innen zu einem Innenraum 190 und von dort über die Ventiltellerführung 70 zum Entlüftungsraum 110 gelangen. Von dort gelangt die Druckluft über das nicht dargestellte Dämpfungselement in die äußere Umgebung 156 des Gehäuses 12 der Ventileinheit 14.

Wird die obere Kammer 60 des Arbeitsraums 58 mit einem hinreichend hohen Steuerdruck p_{S} beaufschlagt, sodass der Steuerdruck in der oberen Kammer 60 höher ist als ein aktueller Druck in der unteren Kammer 62 des Arbeitsraums 58, so bewegt sich der Kolben 24 solange axial in Richtung zum Entlüftungsraum 110, bis der Kolbenteller 50 an dem ersten Zusammenbauteil 18 anschlägt. Dann ist das Auslassventil 86 geschlossen und das Einlassventil 80 ist geöffnet, da der ringförmige Dichtabschnitt 82 des Führungsabschnitts 28 des Kolbens 24 axial entgegen die Vorspannkraft der ersten Druckfeder 74 gegen den Ventilteller 72 gepresst wird. Zugleich ist der Ventilteller 72 von dem wulstartigen Dichtsitz 78 des ersten Zusammenbauteils 18 abgehoben. Nunmehr kann der Vorratsdruck p_{Vor}, wie mit dem Pfeil 150 angedeutet, über das geöffnete Einlassventil 80 und durch die Rippen des ersten Zusammenbauteils 18 bis hinein in den erwähnten Raum 94 gelangen sowie von dort aus, wie mit dem Pfeil 96 angedeutet, einen Bremszylinder oder einen anderen pneumatischen Verbrauch zur Betätigung beaufschlagen. Das Ansprechverhalten des Kolbens 24 ist hierbei mittels der optionalen zweiten Druckfeder 140 eingestellt.

Wird der Steuerdruck p_{S} in der oberen Kammer 60 des Arbeitsraums 58 bis unterhalb eines aktuellen Drucks in der unteren Kammer 62 des Arbeitsraums 58 abgesenkt, so bewegt sich der Kolben 24, hier unterstützt von der Federkraft der zweiten Druckfeder 140, wieder in die in Fig. 1 dargestellte axiale Ausgangslage zurück, in welcher das Einlassventil 80 wieder geschlossen ist und das Auslassventil 86 zur Entlüftung des Bremszylinders oder eines anderen pneumatischen Verbrauchers offen ist.

Die Aufwärtsbewegung des Kolbens 24 wird zumindest teilweise durch eine kleine Blendenöffnung 152 beziehungsweise Bohrung mit kleinem Querschnitt unterstützt, durch die in geringem Umfang ein etwaiger Restdruck aus einem Bremszylinder oder einem anderen pneumatischen Verbraucher entgegen der Richtung des Pfeils 96 in den zylindrischen Raum 94 des rippenbestückten ersten Zusammenbauteils 18 und von dort bis in die untere Kammer 62 des Arbeitsraums 58 am Kolben 24 gelangen kann. Die mindestens eine Blendenöffnung 152 durchsetzt zu diesem Zweck einen dem Kolben 24 zugewandten, trichterartigen Deckelabschnitt 154 des ersten Zusammenbauteils 18 axial vollständig.

Sofern ein am Führungsabschnitt 28 des Kolbens 24 anliegender Lippendichtring 52 nicht genutzt wird, kann auf diese Blendenöffnung 152 verzichtet werden. Bei einer solchen Bauform strömt bei einer Aufwärtsbewegung des Kolbens 24 zu der in Fig. 1 dargestellten Position Druckluft von dem zylindrischen Raum 94 an der radialen Außenseite des ersten Zusammenbauteils 18 an dessen Rippen 90, 92 entlang nach radial innen zu dem den Führungsabschnitt 28 des Kolbens 24 umgebenden Innenraum 190 und von dort entlang der radialen Außenseite des Führungsabschnitt 28 axial in Richtung zum Kolben 24 bis in die untere Kammer 62 des Arbeitsraums 58.

Im Übrigen ist die Funktionsweise eines derartigen Relaisventils einem auf dem Gebiet der Drucklufttechnik tätigen Fachmann hinreichend geläufig, sodass auf eine eingehendere Beschreibung verzichtet werden kann.

In das erste Zusammenbauteil 18 und/oder das zweite Zusammenbauteil 20 kann jeweils mindestens ein Sensor, insbesondere ein elektronischer Drucksensor oder ein Temperatursensor integriert sein. Hierdurch lassen sich kritische Betriebszustände des Relaisventils 10, die beispielsweise eine Vereisung von Komponenten des Relaisventils 10 bewirken können, rechtzeitig detektieren. Derartigen kritischen Betriebszuständen, die unter ungünstigen Umständen zumindest einen Teilausfall des Relaisventils 10 bewirken können, kann dann beispielsweise durch eine geeignete Ansteuerung des Relaisventils 10 und/oder das Aktivieren einer in den Zeichnungen nicht dargestellten elektrischen Heizeinrichtung entgegengewirkt werden.

Die Fig. 2 zeigt eine Seitenansicht einer Vormontageeinheit des Relaisventils 10 gemäß Fig. 1 ohne den Kolben 24. Die im Wesentlichen rotationssymmetrisch zur Längsmittelachse 36 aufgebaute und ohne den Kolben dargestellte Vormontageeinheit 26 umfasst das im Wesentlichen kegelstumpfförmige erste Zusammenbauteil 18 und das im Wesentlichen zylindrische zweite Zusammenbauteil 20. Diese beiden Zusammenbauteile 18, 20 sind mittels der bereits erwähnten Bajonettverbindung 30 mechanisch fest miteinander verbunden.

Zur Schaffung der mittels einer kombinierten Steck-Dreh-Bewegung verriegelbaren und wieder lösbaren Bajonettverbindung 30 weist das zweite Zusammenbauteil 20 ein erstes und ein zweites Bajonettbauteile 160, 162 auf, die radial auswärts gerichtet und diametral zueinander angeordnet sind. An dem ersten Zusammenbauteil 18 sind zwei Rasthaken 164, 166 integral ausgeformt, die ebenfalls gegenüberliegend positioniert sind. In dem hier dargestellten verriegelten Zustand der Bajonettverbindung 30 hintergreifen die beiden Rasthaken 164, 166 des ersten Zusammenbauteil 18 jeweils federnd-rastend die beiden Bajonettbauteile 160, 162 des zweiten Zusammenbauteils 20. Die Rasthaken 164, 166 verfügen jeweils über eine Vertiefung 168, 170 sowie einen Rastvorsprung 172, 174, der jeweils im Bereich eines freien Endes der Rasthaken 164, 166 ausgebildet ist und in Richtung zum ersten Zusammenbauteil 18 weist. Die Bajonettbauteile 160, 162 sind in dem hier gezeigten verriegelten Zustand der Bajonettverbindung 30 jeweils in einer der Vertiefungen 168, 170 der Rasthaken 164, 166 zumindest bereichsweise formschlüssig aufgenommen und gegen unbeabsichtigtes Lösen der Bajonettverbindung 30 jeweils durch die Rastvorsprünge 172, 174 gesichert.

Außerdem ist die erste Gruppe 90 von Rippen mit drei parallel beabstandet zueinander verlaufenden Rippen 180, 182, 184 zur Optimierung des Luftstroms innerhalb des Relaisventils 10 dargestellt, während die Rippen der zweiten Gruppe hier verdeckt sind (siehe hierzu Fig. 3). Eine erste Querrippe 186 und eine zweite Querrippe 188 sind radial gegenüberliegend angerordnet, sowie radial beabstandet und zueinander fluchtend positioniert. Die beiden von deren Seite sichtbaren Querrippen 186, 188 verlaufen jeweils senkrecht zu den stirnseitig sichtbaren Rippen 180, 182, 184 der ersten Gruppe 90 und den nicht sichtbaren Rippen der zweiten Gruppe. Die Rippen 180, 182, 184 der ersten Gruppe 90, die Rippen der zweiten Gruppe und die beiden Querrippen 186, 188 begrenzen zusammen radial innen einen in etwa zylindrischen sowie zentrisch zur Längsmittelachse 36 orientierten Innenraum 190 zur Durchführung des Führungsabschnitts 28 des Kolbens 24.

Das zweite Zusammenbauteil 20 verfügt hier beispielhaft über drei radiale Entlüftungsöffnungen 192 sowie die beiden unterseitigen hohlzylindrischen Fortsätze 122, 124. Die pneumatische Abdichtung der Vormontageeinheit 26 innerhalb der Innenwand 32 des Gehäuses 12 der Ventileinheit 14 erfolgt mit Hilfe von vier Dichtringen 198, 200, 202, 204, die beispielsweise polymere O-Ringe sind. Erkennbar sind jeweils zwei Dichtringe 198, 200an dem ersten Zusammenbauteil 19 und zwei Dichtringe 202, 204 an dem zweiten Zusammenbauteil 20 angeordnet.

Fig. 3 zeigt die Vormontageeinheit 26 gemäß Fig. 2 ebenfalls ohne den Kolben 24 in einer um 90° um eine Längsmittelachse gedrehten Seitenansicht. Die Vormontageeinheit 26 des Relaisventils 10 ist auch in dieser Darstellung mittels der durch die Bajonettverbindung 30 fest miteinander verbundenen Zusammenbauteile 18, 20 aufgebaut.

Die erste Gruppe 90 von Rippen umfasst die parallel zur Zeichenebene sowie jeweils beabstandet zueinander verlaufenden drei Rippen 182, 184, 186, welche in Fig. 3 nur teilweise sichtbar sind. Entsprechend umfasst die zweite Gruppe 92 von Rippen neben der mittigen Rippe 142 mit dem Ausrichtvorsprung 144 zwei weitere, beidseitig parallel beabstandet zu dieser Rippe 142 verlaufende Rippen 210, 212. Die Rippen 180, 182, 184 der ersten Gruppe 90 und die Rippen 142, 210, 212 der zweiten Gruppe 92 sind jeweils gegenüberliegend sowie senkrecht zur Längsmittelachse 36 symmetrisch zueinander beabstandet und jeweils zueinander fluchtend integral an dem ersten Zusammenbauteil 18 ausgebildet.

Am unteren Ende des zweiten Zusammenbauteils 20 verlaufen koaxial zur Längsmittelachse 36 die schon erwähnten beiden hohlzylindrischen Fortsätze 118, 120, wobei das freie Ende 122 des durchmesserkleineren Fortsatzes 118 die schon erwähnte Schneidkante 126 aufweist und an dem durchmessergrößeren Fortsatz 120 die schon erläuterte Schneidkante 128 ausgebildet ist. Der durchmesserkleinere Fortsatz 118 umgrenzt den in Fig. 1 dargestellten Entlüftungsraum 110 des Relaisventils 10.

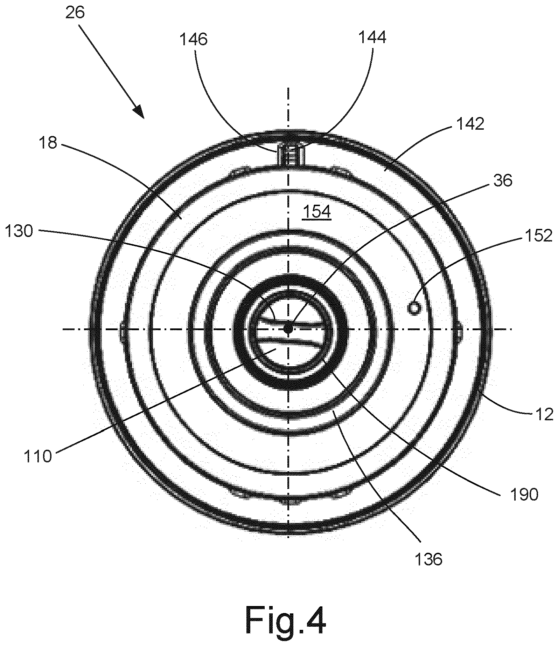

Die Fig. 4 zeigt eine vereinfachte Draufsicht auf die Vormontageeinheit 26 gemäß den Figuren 1 bis 3 ebenfalls ohne den Kolben 24, und zwar gesehen von dem gehäusebodennahen Deckelabschnitt 154 des ersten Zusammenbauteils 18 in Richtung zum zweiten Zusammenbauteil 20. Das erste Zusammenbauteil 18 der Vormontageeinheit 26 ist erkennbar im Wesentlichen rotationssymmetrisch zu der Längsmittelachse 36 ausgebildet. An dem gehäusebodennahen Deckelabschnitt 154 des ersten Zusammenbauteils 18 ist die Ringnut 136 erkennbar, in welche die zweite Druckfeder 140 aufnehmbar ist. Außerdem ist am ersten Zusammenbauteil 18 diejenige Rippe 142 erkennbar, an welcher der radial abstehende Ausrichtvorsprung 144 ausgebildet ist, welcher in eine zugeordnete Aussparung 146 in der Innenwand 32 des Gehäuses 12 eingreift. Im Bereich des Entlüftungsraumes 110 verläuft der in etwa quaderförmige und als Sieb fungierende Steg 130 quer zu der Längsmittelachse 36. Der Steg 130 ist integral an dem zweiten Zusammenbauteil 20 ausgebildet. Der von den hier nicht dargestellten Rippen des ersten Zusammenbauteils 18 radial innen umgrenzte zylindrische Innenraum 190 zur Durchführung des Kolbens des Relaisventils verläuft gleichfalls koaxial zur Längsmittelachse 36. Erkennbar ist auch die Blendenöffnung 152 im Deckelabschnitt 154 des ersten Zusammenbauteils 18.

### Bezugszeichenliste (Bestandteil der Beschreibung)

- 10: Relaisventil
- 12: Gehäuse
- 14: Ventileinheit
- 18: Erstes Zusammenbauteil
- 20: Zweites Zusammenbauteil
- 22: Zentrische Bohrung im ersten Zusammenbauteil
- 23: Zentrische Bohrung im zweiten Zusammenbauteil
- 24: Kolben
- 26: Vormontageeinheit
- 28: Hohlzylindrischer Führungsabschnitt des Kolbens
- 29: Stufenbohrung im Kolben
- 30: Bajonettverbindung
- 32: Innenwand
- 34: Sicherungsring
- 36: Längsmittelachse
- 40: Boden der Innenwand
- 42: Führungszapfen
- 44: Dichtring
- 46: Lippendichtring
- 50: Kolbenteller
- 52: Z-förmiger Dichtring am Kolben
- 58: Arbeitsraum
- 60: Obere Kammer des Arbeitsraums
- 62: Untere Kammer des Arbeitsraums
- 64: Steuerdruckströmung
- 70: Ventiltellerführung
- 72: Ventilteller
- 74: Erste Druckfeder (am Ventilteller)
- 78: Wulstartiger Dichtsitz
- 80: Einlassventil, Einlassventilfunktion
- 82: Ringförmiger Dichtabschnitt am Führungsabschnitt des Kolbens
- 84: Freies Ende der Kolbenstange
- 86: Auslassventil, Auslassventilfunktion
- 90: Erste Gruppe von Rippen
- 92: Zweite Gruppe von Rippen
- 94: Raum mit ausgesteuertem Versorgungsdruck
- 96: Versorgungsdruckströmung
- 100: Axial innere Ringwand der Ventiltellerführung
- 102: Axial äußere Ringwand der Ventiltellerführung
- 104: Ringraum der Ventiltellerführung
- 106: Boden der Ventiltellerführung
- 108: Längsrippen
- 110: Entlüftungsraum
- 112: Entlüftungsströmung
- 118: Durchmesserkleinerer Fortsatz am zweiten Zusammenbauteil
- 120: Durchmessergrößerer Fortsatz am zweiten Zusammenbauteil
- 122: Freies Ende des durchmesserkleineren Fortsatzes
- 124: Freies Ende des durchmessergrößeren Fortsatzes
- 126: Schneidkante am durchmesserkleineren Fortsatz
- 128: Schneidkante am durchmessergrößeren Fortsatz
- 130: Steg am zweiten Zusammenbauteil
- 136: Ringnut im ersten Zusammenbauteil
- 138: Unterseite des Kolbens
- 140: Zweite Druckfeder (am Kolben)
- 142: Rippe der zweiten Gruppe
- 144: Ausrichtvorsprung der Rippe 142
- 146: Aussparung in der Innenwand
- 150: Vorratsdruckströmung
- 152: Blendenöffnung, Bohrung im Deckelabschnitt des ersten Zusammenbauteils
- 154: Deckelabschnitt des ersten Zusammenbauteils
- 156: Äußere Umgebung
- 160: Erstes Bajonettbauteil
- 162: Zweites Bajonettbauteil
- 164: Erster Rasthaken
- 166: Zweiter Rasthaken
- 168: Vertiefung im ersten Rasthaken
- 170: Vertiefung im zweiten Rasthaken
- 172: Rastvorsprung am ersten Rasthaken
- 174: Rastvorsprung am zweiten Rasthaken
- 180: Erste Rippe der ersten Gruppe
- 182: Zweite Rippe der ersten Gruppe
- 184: Dritte Rippe der ersten Gruppe
- 186: Erste Querrippe
- 188: Zweite Querrippe
- 190: Innenraum am ersten Zusammenbauteil
- 192: Entlüftungsöffnungen
- 196: Radiale Entlüftung
- 198: Dichtring
- 200: Dichtring
- 202: Dichtring
- 204: Dichtring
- 210: Erste Rippe der zweiten Gruppe
- 212: Zweite Rippe der zweiten Gruppe
- ps: Steuerdruck
- p_{Ver}: Versorgungsdruck; ausgesteuerter Druck
- p_{Vor}: Vorratsdruck

## Patentansprüche

1. Relaisventil (10) für eine pneumatische Ventileinheit (14), beispielsweise für eine Ventileinheit für ein Bremssystem eines Nutzfahrzeugs, welches ein erstes Zusammenbauteil (18) und ein zweites Zusammenbauteil (20) aufweist, wobei in dem ersten Zusammenbauteil (18) ein hohlzylindrischer Führungsabschnitt (28) eines Kolbens (24) des Relaisventils (10) axial geführt aufgenommen oder aufnehmbar ist, und wobei das zweite Zusammenbauteil (20) weitere Ventilbauteile sowie den Entlüftungsbereich des Relaisventils (10) aufweist, **dadurch gekennzeichnet, dass** zumindest das erste Zusammenbauteil (18) sowie das zweite Zusammenbauteil (20) zusammengebaut eine Vormontageeinheit (26) bilden, dass das erste Zusammenbauteil (18) und das zweite Zusammenbauteil (20) zur Erzeugung der Vormontageeinheit (26) mittels einer Bajonettverbindung (30) zusammengefügt sind, und dass die Vormontageeinheit (26) in einen durch eine topfförmige Innenwand (32) begrenzten Innenraum eines Gehäuses (12) der Ventileinheit (14) eingesetzt sowie darin befestigt ist.

2. Relaisventil nach Anspruch 1, **dadurch gekennzeichnet, dass** der Führungsabschnitt (28) eine diese und einen Kolbenteller (50) des Kolbens (24) durchdringende zentrische Stufenbohrung (29) aufweist, dass am inneren Boden (40) des Gehäuses (12) ein zentrisch zu einer Längsmittelachse (36) des Relaisventils (10) ausgerichteter Führungszapfen (42) ausgebildet ist, und dass der Kolben (24) mit seiner Stufenbohrung (29) auf dem Führungszapfen (42) aufgenommen sowie durch diesen axial verschiebbar geführt ist.

3. Relaisventil nach Anspruch 2, **dadurch gekennzeichnet, dass** das erste Zusammenbauteil (18) eine kegelstumpfförmige Grundgeometrie sowie das zweite Zusammenbauteil (20) eine zylindrische Grundgeometrie mit jeweils einer zentrischen axialen Bohrung (22; 23) aufweist, dass der Führungsabschnitt (28) des Kolbens (24) axial beweglich in der zentrischen Bohrung (22) des ersten Zusammenbauteils (18) aufgenommen ist, dass in der zentrischen Bohrung (23) des zweiten Zusammenbauteils (20) eine hohlzylindrische Ventiltellerführung (70) befestigt ist, an deren axial inneren Ende ein Ventilteller (72) axial beweglich gelagert ist, dass ein radial innen am ersten Zusammenbauteil (18) ausgebildeter wulstartiger, kreisförmiger, axial vorstehender Dichtsitz (78) sowie der mittels einer ersten Druckfeder (74) gegen diesen Dichtsitz (78) mit einer Federkraft beaufschlagter Ventilteller (72) des zweiten Zusammenbauteils (20) ein Einlassventil (80) des Relaisventils (10) bilden, und dass ein ringförmiger Dichtabschnitt (82) am axial freien Ende (84) des Führungsabschnitts (28) des Kolbens (24) sowie der Ventilteller (72) am zweiten Zusammenbauteil (20) ein Auslassventil (86) bilden.

4. Relaisventil nach Anspruch 2 oder 3, **dadurch gekennzeichnet, dass** in der zentrischen Bohrung (22) des ersten Zusammenbauteils (18) ein Lippendichtring (46) angeordnet ist, welcher abdichtend und radial führend gegen die zylindrische Außenseite des Führungsabschnitts (28) des Kolbens (24) wirkt.

5. Relaisventil nach einem der Ansprüche 1 bis 4, **dadurch gekennzeichnet, dass** das erste Zusammenbauteil (18) zwei radial gegenüber angeordnete sowie in Bezug zur Längsachse (36) des Relaisventils (10) zueinander beabstandete Gruppen (90, 92) mit jeweils mindestens drei zueinander beabstandeten, radial auswärts gerichteten Rippen (142, 180, 182, 184, 210, 212) zur Luftführung aufweist, dass diese Rippen (142, 180, 182, 184, 210, 212) innerhalb der beiden Gruppen (90, 92) jeweils zueinander fluchtend ausgebildet sind, dass in mindestens einer Gruppe (90, 92) mindestens eine Rippe (142) einen radial auswärts gerichteten Ausrichtvorsprung (144) aufweist, welcher als Montagehilfe zur Gewährleistung einer in Umfangsrichtung ordnungsgemäß ausgerichteten Einbauposition der Vormontageeinheit (26) mit optimaler Luftführung zumindest bereichsweise formschlüssig in eine zugeordnete, geometrisch komplementäre Aussparung (146) in der Innenwand (32) des Gehäuses (12) der Ventileinheit (14) angeordnet ist.

6. Relaisventil nach einem der Ansprüche 1 bis 4, **dadurch gekennzeichnet, dass** das erste Zusammenbauteil (18) zwei radial gegenüber angeordnete sowie in Bezug zur Längsachse (36) des Relaisventils (10) zueinander beabstandete Gruppen (90, 92) mit jeweils mindestens drei zueinander beabstandeten, radial auswärts gerichteten Rippen (142, 180, 182, 184, 210, 212) zur Luftführung aufweist, dass diese Rippen (142, 180, 182, 184, 210, 212) innerhalb der beiden Gruppen (90, 92) jeweils zueinander fluchtend ausgebildet sind, dass in mindestens einer Gruppe (90, 92) mindestens eine Rippe (142) einen radial auswärts gerichteten Ausrichtvorsprung (144) aufweist, welcher als optische Montagehilfe zur Gewährleistung einer in Umfangsrichtung ordnungsgemäß ausgerichteten Einbauposition der Vormontageeinheit (26) mit optimaler Luftführung dient, ohne dass dieser Ausrichtvorsprung (144) dazu in eine zugeordnete Aussparung in der Innenwand (32) des Gehäuses (12) der Ventileinheit (14) eingreift.

7. Relaisventil nach Anspruch 5 oder 6, **dadurch gekennzeichnet, dass** am ersten Zusammenbauteil (18) orthogonal zu den Rippen (142, 180, 182, 184, 210, 212) der beiden Gruppen (90, 92) mindestens zwei einander gegenüberliegende Querrippen (186, 188) zueinander fluchtend ausgebildet sind.

8. Relaisventil nach Anspruch 7, **dadurch gekennzeichnet, dass** die beiden Gruppen (90, 92) mit den jeweils mindestens drei Rippen (142, 180, 182, 184, 210, 212) und die mindestens zwei Querrippen (186, 188) so ausgebildet und angeordnet sind, dass sie einen näherungsweise zylindrischen sowie koaxial zur Längsmittelachse (36) ausgebildeten Innenraum (190) zur Durchführung des Führungsabschnitts (28) des Kolbens (24) freilassen.

9. Relaisventil nach einem der Ansprüche 5 bis 8, **dadurch gekennzeichnet, dass** der mindestens eine Ausrichtvorsprung (144) an der mindestens einen Rippe (142) in Umfangsrichtung derart angeordnet ist, dass sich bei in das Gehäuse (12) der Ventileinheit (14) eingesetzter Vormontageeinheit (26) eine optimale Luftführung ergibt.

10. Relaisventil nach einem der Ansprüche 4 bis 9, **dadurch gekennzeichnet, dass** das zweite Zusammenbauteil (20) axial außen einen durchmesserkleineren axialen Fortsatz (118) und einen durchmessergrößeren axialen Fortsatz (120) aufweist, welche koaxial zur Längsmittelachse (36) ausgebildet sind, wobei der durchmesserkleinere Fortsatz (118) im Anschluss an das Auslassventil (86) einen Entlüftungsraum (110) des Relaisventils (10) umgrenzt.

11. Relaisventil nach einem der Ansprüche 4 bis 10, **dadurch gekennzeichnet, dass** die am zweiten Zusammenbauteil (20) befestigte Ventiltellerführung (70) eine innere Ringwand (100) und eine zu dieser koaxial angeordnete äußere Ringwand (102) aufweist, wobei zwischen der inneren Ringwand (100) und der äußeren Ringwand (102) ein Ringraum (104) mit einem Boden (106) zur Aufnahme eines axialen Endes der ersten Druckfeder (74) ausgebildet ist.

12. Relaisventil nach Anspruch 11, **dadurch gekennzeichnet, dass** die innere Ringwand (100) der Ventiltellerführung (70) eine Vielzahl von in Umfangsrichtung gleichmäßig zueinander beabstandet angeordnete und parallel zur Längsmittelachse (36) orientierte Längsrippen (108) aufweist.

13. Relaisventil nach einem der Ansprüche 10 bis 12, **dadurch gekennzeichnet, dass** freie Enden (122, 124) der durchmesserkleineren und der durchmessergrößeren Fortsätze (118, 120) jeweils eine Schneidkante (126, 128) aufweisen.

14. Relaisventil nach Anspruch 13, **dadurch gekennzeichnet, dass** der durchmesserkleinere Fortsatz (118) mindestens einen quer zur Längsmittelachse (36) verlaufenden Steg (130) aufweist.

15. Relaisventil nach einem der Ansprüche 1 bis 14, **dadurch gekennzeichnet, dass** das erste Zusammenbauteil (18) im Bereich eines dem Kolbenteller (50) zugewandten Deckelabschnitts (154) eine Ringnut (136) aufweist, welche einer kolbenführungsseitigen Unterseite (138) des Kolbens (24) zugewandt ist, und dass in der Ringnut (136) das eine axiale Ende einer zweiten Druckfeder (140) angeordnet ist, welche sich mit ihrem anderen axialen Ende am Kolbenteller (50) abstützt.

16. Relaisventil nach einem der Ansprüche 1 bis 15, **dadurch gekennzeichnet, dass** in das erste Zusammenbauteil (18) und/oder das zweite Zusammenbauteil (20) des Relaisventils (10) mindestens ein Drucksensor oder ein Temperatursensor integriert ist.

## Claims

1. Relay valve (10) for a pneumatic valve unit (14), for example for a valve unit for a brake system of a utility vehicle, comprising a first assembly component (18) and a second assembly component (20), a hollow cylindrical guide portion (28) of a piston (24) of the relay valve (10) being received or receivable in the first assembly component (18) in an axially guided manner, and the second assembly component (20) comprising further valve components and the ventilation region of the relay valve (10), **characterized in that** at least the first assembly component (18) and the second assembly component (20), when assembled, form a pre-assembly unit (26), that the first assembly component (18) and the second assembly component (20) are joined together to produce the pre-assembly unit (26) by means of a bayonet connection (30), and **in that** the pre-assembly unit (26) is inserted into an interior space of a housing (12) of the valve unit (14), which interior space is delimited by a pot-shaped inner wall (32), and is secured therein.

2. Relay valve according to claim 1, **characterized in that** the guide portion (28) has a central stepped bore (29) which penetrates said guide portion and a piston plate (50) of the piston (24), that a guide pin (42), which is aligned centrally with respect to a longitudinal center axis (36) of the relay valve (10), is formed on the inner base (40) of the housing (12), and **in that** the stepped bore (29) of the piston (24) is received on the guide pin (42) and is guided by said guide pin in an axially displaceable manner.

3. Relay valve according to claim 2, **characterized in that** the first assembly component (18) has a frustoconical basic geometry and the second assembly component (20) has a cylindrical basic geometry, each having a central axial bore (22; 23), that the guide portion (28) of the piston (24) is received in the central bore (22) of the first assembly component (18) in an axially movable manner, that a hollow cylindrical valve disc guide (70) is secured in the central bore (23) of the second assembly component (20), on the axially inner end of which guide a valve disc (72) is mounted in an axially movable manner, that a bead-like, circular, axially projecting sealing seat (78) formed radially on the inside on the first assembly component (18), and the valve disc (72) of the second assembly component (20), which is loaded against this sealing seat (78) with a spring force by a first compression spring (74), form an inlet valve (80) of the relay valve (10), and **in that** an annular sealing portion (82) on the axially free end (84) of the guide portion (28) of the piston (24), and the valve disc (72) on the second assembly component (20) form an outlet valve (86).

4. Relay valve according to either claim 2 or claim 3, **characterized in that** a lip sealing ring (46) is arranged in the central bore (22) of the first assembly component (18), which ring acts in a sealing and radially guiding manner against the cylindrical outer face of the guide portion (28) of the piston (24).

5. Relay valve according to any of claims 1 to 4, **characterized in that** the first assembly component (18) comprises two groups (90, 92) which are arranged radially opposite one another and are spaced apart from one another with respect to the longitudinal axis (36) of the relay valve (10), and which each comprise at least three ribs (142, 180, 182, 184, 210, 212), which are spaced apart from one another and directed radially outward, for air guidance, that these ribs (142, 180, 182, 184, 210, 212) are each formed in alignment with one another within the two groups (90, 92), that, in at least one group (90, 92), at least one rib (142) has a radially outwardly directed alignment projection (144), which, as an assembly aid for ensuring a mounting position of the pre-assembly unit (26) that is correctly aligned in the circumferential direction and has optimal air guidance, is arranged in an associated, geometrically complementary recess (146) in the inner wall (32) of the housing (12) of the valve unit (14) in a form-fitting manner, at least in regions.

6. Relay valve according to any of claims 1 to 4, **characterized in that** the first assembly component (18) comprises two groups (90, 92) which are arranged radially opposite one another and are spaced apart from one another with respect to the longitudinal axis (36) of the relay valve (10), and which each comprise at least three ribs (142, 180, 182, 184, 210, 212), which are spaced apart from one another and directed radially outward, for air guidance, that these ribs (142, 180, 182, 184, 210, 212) are each formed in alignment with one another within the two groups (90, 92), that, in at least one group (90, 92), at least one rib (142) has a radially outwardly directed alignment projection (144) which is used as an optical assembly aid for ensuring a mounting position of the pre-assembly unit (26) that is correctly aligned in the circumferential direction and has optimal air guidance, without said alignment projection (144) being arranged in an associated recess in the inner wall (32) of the housing (12) of the valve unit (14) for this purpose.

7. Relay valve according to either claim 5 or claim 6, **characterized in that** at least two mutually opposite transverse ribs (186, 188) are formed in alignment with one another on the first assembly component (18), orthogonally to the ribs (142, 180, 182, 184, 210, 212) of the two groups (90, 92).

8. Relay valve according to claim 7, **characterized in that** the two groups (90, 92) having the at least three ribs (142, 180, 182, 184, 210, 212) and the at least two transverse ribs (186, 188), in each case, are formed and arranged such that they leave free an approximately cylindrical interior space (190), which is formed coaxially with the longitudinal center axis (36), for the passage of the guide portion (28) of the piston (24).

9. Relay valve according to any of claims 5 to 8, **characterized in that** the at least one alignment projection (144) is arranged on the at least one rib (142) in the circumferential direction in such a way that optimal air guidance results when the pre-assembly unit (26) is inserted into the housing (12) of the valve unit (14).

10. Relay valve according to any of claims 4 to 9, **characterized in that** the second assembly component (20), axially on the outside, comprises a smaller-diameter axial extension (118) and a larger-diameter axial extension (120), which extensions are formed coaxially with respect to the longitudinal center axis (36), the smaller-diameter extension (118), following the outlet valve (86), surrounding a ventilation chamber (110) of the relay valve (10).

11. Relay valve according to any of claims 4 to 10, **characterized in that** the valve disc guide (70) fastened to the second assembly component (20) comprises an inner annular wall (100) and an outer annular wall (102) arranged coaxially thereto, an annular space (104) having a base (106) for receiving an axial end of the first compression spring (74) being formed between the inner annular wall (100) and the outer annular wall (102).

12. Relay valve according to claim 11, **characterized in that** the inner annular wall (100) of the valve disc guide (70) comprises a plurality of longitudinal ribs (108) which are uniformly spaced apart from one another in the circumferential direction and oriented in parallel with the longitudinal center axis (36).

13. Relay valve according to any of claims 10 to 12 **characterized in that** free ends (122, 124) of the smaller-diameter and the larger-diameter extensions (118, 120) each have a cutting edge (126, 128).

14. Relay valve according to claim 13, **characterized in that** the smaller-diameter extension (118) has at least one web (130) extending transversely to the longitudinal center axis (36).

15. Relay valve according to any of claims 1 to 14, **characterized in that** the first assembly component (18) has an annular groove (136) in the region of a cover portion (154) facing the piston plate (50), which annular groove faces a lower side (138) of the piston (24) on the piston guide side, and **in that** one axial end of a second compression spring (140) is arranged in the annular groove (136), which spring is supported on the piston plate (50) at the other axial end thereof.

16. Relay valve according to any of claims 1 to 15, **characterized in that** at least one pressure sensor or a temperature sensor is integrated into the first assembly component (18) and/or the second assembly component (20) of the relay valve (10).

## Revendications

1. Soupape-relais (10) pour une unité de soupape pneumatique (14), par exemple pour une unité de soupape pour un système de frein d'un véhicule utilitaire, qui présente un premier élément d'assemblage (18) et un second élément d'assemblage (20), dans laquelle, dans le premier élément d'assemblage (18), une section de guidage cylindrique creuse (28) d'un piston (24) de la soupape-relais (10) est logée ou peut être logée en étant guidée axialement et dans laquelle le second élément d'assemblage (20) présente d'autres composants de soupape ainsi qu'une zone de purge de la soupape-relais (10), **caractérisée en ce qu'**au moins le premier élément d'assemblage (18) ainsi que le second élément d'assemblage (20) forment en étant assemblés une unité de prémontage (26), **en ce que** le premier élément d'assemblage (18) et le second élément d'assemblage (20) sont réunis pour la production de l'unité de prémontage (26) au moyen d'une liaison à baïonnette (30) et **en ce que** l'unité de prémontage (26) est insérée dans un espace intérieur d'un boîtier (12) de l'unité de soupape (14) délimité par une paroi interne en forme de godet (32) et y est fixée.

2. Soupape-relais selon la revendication 1, **caractérisée en ce que** la section de guidage (28) présente un alésage étagé central (29) traversant celle-ci et une tête de piston (50) du piston (24), **en ce que**, sur le fond interne (40) du boîtier (12), un pivot de guidage (42) orienté de manière centrée par rapport à un axe central longitudinal (36) de la soupape-relais (10) est formé et que le piston (24) est reçu avec son alésage étagé (29) sur le pivot de guidage (42) et est guidé de manière axialement déplaçable par celui-ci.

3. Soupape-relais selon la revendication 2, **caractérisé en ce que** le premier élément d'assemblage (18) présente une géométrie de base tronconique et le second élément d'assemblage (20) présente une géométrie de base cylindrique avec respectivement un alésage axial central (22 ; 23), que la section de guidage (28) du piston (24) est reçue de manière axialement mobile dans l'alésage central (22) du premier élément d'assemblage (18), que dans l'alésage central (23) du second élément d'assemblage (20), un guidage de tête de soupape cylindrique creux (70) est fixé, sur les extrémités internes axiales duquel une tête de soupape (72) est montée de manière axialement mobile, qu'un siège d'étanchéité (78) en forme de bourrelet, circulaire, faisant saillie axialement, formé radialement à l'intérieur du premier élément d'assemblage (18) ainsi que la tête de soupape (72) pouvant être sollicitée au moyen d'un premier ressort de compression (74) contre ce siège d'étanchéité (78) avec une force de ressort du second élément d'assemblage (20) forment une soupape d'entrée (80) de la soupape-relais (10) et qu'une section d'étanchéité annulaire (82) au niveau des extrémités libres axiales (84) de la section de guidage (28) du piston (24) ainsi que la tête de soupape (72) forment au niveau du second élément d'assemblage (20) une soupape de sortie (86).

4. Soupape-relais selon la revendication 2 ou 3, **caractérisée en ce que** dans l'alésage central (22) du premier élément d'assemblage (18), une bague d'étanchéité à lèvres (46) est agencée, qui assure l'étanchéité et le guidage radial contre le côté externe cylindrique de la section de guidage (28) du piston (24).

5. Soupape-relais selon l'une des revendications 1 à 4,
**caractérisée en ce que** le premier élément d'assemblage (18) présente deux groupes (90, 92) agencés radialement à l'opposé ainsi qu'à distance l'un de l'autre par rapport à l'axe longitudinal (36) de la soupape-relais (10) comportant respectivement au moins trois nervures espacées l'une de l'autre et orientées radialement vers l'extérieur (142, 180, 182, 184, 210, 212) pour le guidage de l'air, que ces nervures (142, 180, 182, 184, 210, 212) sont conçues à l'intérieur des deux groupes (90, 92) respectivement alignées les unes par rapport aux autres, que dans au moins un groupe (90, 92) au moins une nervure (142) présente une saillie d'alignement orientée radialement vers l'extérieur (144), qui est agencée en tant qu'aide au montage afin de garantir une position d'assemblage correctement alignée dans le sens de la circonférence de l'unité de prémontage (26) avec un guidage d'air optimal au moins par sections par complémentarité de forme dans une encoche (146) géométriquement complémentaire associée dans la paroi interne (32) du boîtier (12) de l'unité de soupape (14).

6. Soupape-relais selon l'une des revendications 1 à 4, **caractérisée en ce que** le premier élément d'assemblage (18) présente deux groupes (90, 92) agencés radialement à l'opposé ainsi qu'à distance l'un de l'autre par rapport à l'axe longitudinal (36) de la soupape-relais (10) comportant respectivement au moins trois nervures espacées l'une de l'autre et orientées radialement vers l'extérieur (142, 180, 182, 184, 210, 212) pour le guidage de l'air, que ces nervures (142, 180, 182, 184, 210, 212) sont conçues à l'intérieur des deux groupes (90, 92) respectivement alignées les unes par rapport aux autres, que dans au moins un groupe (90, 92), au moins une nervure (142) présente une saillie d'alignement orientée radialement vers l'extérieur (144), qui est agencée en tant qu'aide au montage afin de garantir une position d'assemblage correctement alignée dans le sens de la circonférence de l'unité de prémontage (26) avec un guidage d'air optimal, sans que cette saillie d'alignement (144) ne vienne en prise pour ce faire dans une encoche associée dans la paroi interne (32) du boîtier (12) de l'unité de soupape (14).

7. Soupape-relais selon la revendication 5 ou 6, **caractérisée en ce que** sur le premier élément d'assemblage (18) orthogonal aux nervures (142, 180, 182, 184, 210, 212) des deux groupes (90, 92), au moins deux nervures transversales (186, 188) opposées l'une à l'autre sont conçues alignées l'une par rapport à l'autre.

8. Soupape-relais selon la revendication 7, **caractérisée en ce que** les deux groupes (90, 92) comportant respectivement les au moins trois nervures (142, 180, 182, 184, 210, 212) et les au moins deux nervures transversales (186, 188) sont conçus et agencés de manière à laisser libre un espace intérieur (190) conçu approximativement cylindrique et coaxial à l'axe central longitudinal (36) pour le passage de la section de guidage (28) du piston (24).

9. Soupape-relais selon l'une des revendications 5 à 8, **caractérisée en ce que** la au moins une saillie d'alignement (144) est agencée sur l'au moins une nervure (142) dans le sens de la circonférence de sorte à obtenir un guidage optimal de l'air lorsque l'unité de prémontage (26) est insérée dans le boîtier (12) de l'unité de soupape (14).

10. Soupape-relais selon l'une des revendications 4 à 9, **caractérisée en ce que** le second élément d'assemblage (20) présente axialement à l'extérieur un prolongement axial de plus petit diamètre (118) et un prolongement axial de plus grand diamètre (120), qui sont conçus de manière coaxiale à l'axe central longitudinal (36), dans laquelle le prolongement de plus petit diamètre (118) délimite, à la suite de la soupape de sortie (86), un espace de ventilation (110) de la soupape-relais (10).

11. Soupape-relais selon l'une des revendications 4 à 10,
**caractérisée en ce que** le guidage de tête de soupape (70) fixé sur le second élément d'assemblage (20) présente une paroi annulaire intérieure (100) et une paroi annulaire extérieure (102) agencée coaxiale à celle-ci, dans laquelle entre la paroi annulaire intérieure (100) et la paroi annulaire extérieure (102), un espace annulaire (104) est formé avec un fond (106) pour la réception d'une extrémité axiale du premier ressort de compression (74).

12. Soupape-relais selon la revendication 11, **caractérisée en ce que** la paroi annulaire intérieure (100) du guidage de tête de soupape (70) présente une pluralité de nervures longitudinales (108) régulièrement espacées dans le sens de la circonférence et orientées parallèlement à l'axe central longitudinal (36).

13. Soupape-relais selon l'une des revendications 10 à 12,
**caractérisée en ce que** les extrémités libres (122, 124) des prolongements de plus petit et de plus grand diamètre (118, 120) présentent respectivement une arête de coupe (126, 128).

14. Soupape-relais selon la revendication 13, **caractérisée en ce que** le prolongement de plus petit diamètre (118) présente au moins une entretoise (130) s'étendant transversalement à l'axe central longitudinal (36).

15. Soupape-relais selon l'une des revendications 1 à 14,
**caractérisée en ce que** le premier élément d'assemblage (18) présente dans la zone d'une section de couvercle (154) tournée vers la tête de piston (50), une rainure annulaire (136), qui fait face à un côté inférieur côté guidage de piston (138) du piston (24) et que dans la rainure annulaire (136), une extrémité axiale d'un second ressort de compression (140) est agencée, qui s'appuie avec son autre extrémité axiale sur la tête de piston (50).

16. Soupape-relais selon l'une des revendications 1 à 15,
**caractérisée en ce que** dans le premier élément d'assemblage (18) et/ou le second élément d'assemblage (20) de la soupape-relais (10), au moins un capteur de pression ou un capteur de température est intégré.
